# EUROPÄISCHE PATENTANMELDUNG

(11) **EP 3 290 143 A1**
(43) Veröffentlichungstag der Anmeldung: **07.03.2018**
(21) Anmeldenummer: 16186883.1
(22) Anmeldetag: 01.09.2016
(51) Int. Cl.: B23K 3/02, B23K 3/08, B23K 9/16, B23K 9/29, B23K 9/32, G06F 3/01

(54) **SCHWEISS- ODER LÖTVORRICHTUNG UND SCHWEISS- ODER LÖTVERFAHREN MIT HAPTISCHEM SIGNALGEBER**

(71) Anmelder: EWM AG, 56271 Mündersbach (DE)
(72) Erfinder: Szczesny, Michael, 56271 Mündersbach (DE)
(74) Vertreter: Steiniger, Carmen

(57) **Zusammenfassung**

Die vorliegende Erfindung betrifft eine Schweiß- oder Lötvorrichtung mit einem Schweiß- oder Lötbrenner (9) mit einem Griff (5) zur manuellen Handhabung des Schweiß- oder Lötbrenners (9), einer Energieversorgungseinrichtung zum Bereitstellen wenigstens eines Arbeitsstroms oder einer Arbeitsspannung für die Schweiß- oder Lötvorrichtung, einer Steuer- und Regelvorrichtung zum Erfassen und Regeln des Arbeitsstroms oder der Arbeitsspannung zwischen dem Schweiß- oder Lötbrenner (9) und einer Schweiß- oder Lötstelle und zum Einstellen von Arbeitsstrom oder Arbeitsspannung an der Energieversorgungseinrichtung. Die Erfindung betrifft ferner ein Schweiß- oder Lötverfahren mit einer entsprechenden Schweiß- oder Lötvorrichtung (9). Um eine zuverlässigere Warnmöglichkeit bei durch die manuelle Bedienung eines Schweiß- oder Lötbrenneres (9) einer Schweiß- oder Lötvorrichtung verursachten Abweichungen von Sollschweiß- oder Lötvorgaben für den Bediener einer Schweiß- oder Lötvorrichtung zur Verfügung zu stellen, schlägt die Erfindung vor, dass in oder an dem Griff (5) wenigstens ein mit der Steuer- und Regelvorrichtung gekoppelter haptischer Signalgeber (6) vorgesehen ist.

## Beschreibung

Die vorliegende Erfindung betrifft eine Schweiß- oder Lötvorrichtung mit einem Schweiß- oder Lötbrenner mit einem Griff zur manuellen Handhabung des Schweiß- oder Lötbrenners, einer Energieversorgungseinrichtung zum Bereitstellen wenigstens eines Arbeitsstroms oder einer Arbeitsspannung für einen Schweiß- oder Lötprozess, einer Steuer- und Regelvorrichtung zum Erfassen und Regeln des Arbeitsstroms oder der Arbeitsspannung zwischen dem Schweiß- oder Lötbrenner und einer Schweiß- oder Lötstelle und zum Einstellen von Arbeitsstrom oder Arbeitsspannung an der Energieversorgungseinrichtung. Die Erfindung betrifft ferner ein Schweiß- oder Lötverfahren mit einer Schweiß- oder Lötvorrichtung mit einem Schweiß- oder Lötbrenner, der mittels eines Griffes manuell bewegt wird, wobei der Schweiß- oder Lötbrenner mit einer Energieversorgungseinrichtung mit wenigstens einem Arbeitsstrom oder einer Arbeitsspannung versorgt wird, und wobei mit einer Steuer- und Regelvorrichtung der Schweiß- oder Lötvorrichtung der Arbeitsstrom oder die Arbeitsspannung zwischen dem Schweiß- oder Lötbrenner und einer Schweiß- oder Lötstelle erfasst und geregelt wird und wenigstens der Arbeitsstrom oder die Arbeitsspannung an der Energieversorgungseinrichtung eingestellt werden.

Aus dem Stand der Technik, wie beispielsweise aus der Druckschrift EP 2 022 592 B1, ist es bekannt, bei einem manuell ausgeführten Lichtbogenschweißvorgang die Schweißgeschwindigkeit zu erfassen und dann, wenn diese einen kritischen Wert über- oder unterschreitet, an den Bediener der Schweißvorrichtung ein optisches oder akustisches Warnsignal auszugeben. Dabei können beispielsweise aufgrund greller Lichtverhältnisse und/oder hoher Umgebungslautstärke am Schweißort derartige Warnsignale durch den Schweißer für geraume Zeit unbemerkt bleiben, was sich nachteilig auf das Schweißresultat auswirken kann.

Es ist daher die Aufgabe der vorliegenden Erfindung, eine zuverlässigere Warnmöglichkeit bei durch die manuelle Bedienung eines Schweiß- oder Lötbrenners einer Schweiß- oder Lötvorrichtung verursachten Abweichungen von Sollschweiß- oder Solllötvorgaben für den Bediener einer Schweiß- oder Lötvorrichtung zur Verfügung zu stellen.

Die Aufgabe wird zum einen durch eine Schweiß- oder Lötvorrichtung der eingangs genannten Gattung gelöst, bei der in oder an dem Griff wenigstens ein mit der der Steuer- und Regelvorrichtung gekoppelter haptischer Signalgeber vorgesehen ist.

Bei der vorliegenden Erfindung wird durch die Steuer- und Regelvorrichtung ein beispielsweise an einem sich zwischen dem Schweiß- oder Lötbrenner und einer Schweiß- oder Lötstelle ausbildenden Lichtbogen ein Arbeitsstrom oder eine Arbeitsspannung erfasst. Über- oder unterschreitet der erfasste Arbeitsstrom oder die erfasste Arbeitsspannung eine voreingestellte oder in der Steuer- und Regelvorrichtung hinterlegte Schwelle, wird an den haptischen Signalgeber ein Warnsignal ausgegeben, woraufhin dieser ein haptisches Signal ausgibt, welches den Bediener der Schweiß- oder Lötvorrichtung sofort über eine Abweichung von den Sollschweiß- oder -lötvorgaben informiert.

Mit dem wenigstens einen haptischen Signalgeber wird also an den Bediener der Schweiß- oder Lötvorrichtung, der den Schweiß- oder Lötbrenner mittels des Griffes bedient, das heißt, den Schweiß- oder Lötbrenner zu einer Schweiß- oder Lötstelle hin, an dieser entlang und von dieser weg führt, bei einer Fehlstellung des Schweiß- oder Lötbrenners direkt an dem Griff ein haptisches Signal übermittelt. Dieses haptische Signal ist im einfachsten Fall ein Vibrationssignal, kann jedoch auch ein Klopfen im Griff, ein Kratzen an der Griffoberfläche, ein Aufweiten und Abschwellen des Griffumfanges oder der Grifflänge oder ein Schwingen, Schleudern oder Drehen des Griffes sein. Dieses haptische Signal wird von dem Bediener, der den Griff festhält, unmittelbar erfasst, sodass er sofort reagieren und den Schweiß- oder Lötbrenner in eine verbesserte Stellung und/oder Bewegung bringen kann.

In vorteilhaften Ausgestaltungen der erfindungsgemäßen Schweiß- oder Lötvorrichtung weist der wenigstens eine haptische Signalgeber wenigstens einen Motor mit Unwucht, wenigstens einen Magnetvibrationsmotor und/oder wenigstens ein Piezoelement auf.

In einer bevorzugten Ausbildung der erfindungsgemäßen Schweiß- oder Lötvorrichtung ist der wenigstens eine haptische Signalgeber in einer für eine Auflage einer Handfläche eines die Schweiß- oder Lötvorrichtung bedienenden Bedieners vorgesehenen, den Griff zumindest teilweise ummantelnden Griffschale vorgesehen. Über diese Griffschale ist das haptische Signal direkt auf die Handinnenfläche des Bedieners, wo dieser typischerweise besonders sensibel ist, übertragbar, sodass hierdurch besonders zeitnah durch den Bediener auf Fehlstellungen des Schweiß- oder Lötbrenners reagiert werden kann.

Es kann Situationen geben, an denen eine bestimmte Position des Schweiß- oder Lötbrenners, welche sonst als Fehlstellung eingestuft würde, gerade gewünscht ist. Für solche Fälle empfiehlt es sich, die erfindungsgemäße Schweiß- oder Lötvorrichtung so zu gestalten, dass der wenigstens eine haptische Signalgeber beispielsweise manuell an- und ausschaltbar ist.

Ein besonders übersichtlicher Vorrichtungsaufbau ist dann gegeben, wenn nur zwei elektrische Leitungen zwischen dem Schweiß- oder Lötbrenner und der Steuer- und Regelvorrichtung vorgesehen sind. So können über nur zwei elektrische Leitungen eine Bedien- und Anzeigeeinheit und/oder der haptische Signalgeber am Schweiß- oder Lötbrenner und/oder Sensoren zur Messung einer Temperatur an der Schweiß- oder Lötstelle und/oder Sensoren zur Abstandsmessung zwischen dem Schweiß- oder Lötbrenner und der Schweiß- oder Lötstelle und/oder Sensoren zur Ermittlung einer Schweißgeschwindigkeit mit Energie versorgt und ein Warnsignal von der Steuer- und Regelvorrichtung an den haptischen Signalgeber übermittelt werden.

Die erfindungsgemäße Schweiß- oder Lötvorrichtung kann ein mit der Steuer- und Regelvorrichtung gekoppeltes Erkennungsmodul aufweisen, mit dem erkennbar ist, ob die Steuer- und Regelvorrichtung mit dem haptischen Signalgeber verbunden ist oder nicht.

Die Aufgabe wird ferner durch ein Verfahren der eingangs genannten Art gelöst, bei dem dann, wenn durch die Steuer- und Regelvorrichtung ein Über- oder Unterschreiten einer darin gespeicherten, berechneten oder fest installierten Schwelle für den Arbeitsstrom oder die Arbeitsspannung erfasst wird, von der Steuer- und Regelvorrichtung ein Warnsignal an wenigstens einen in oder an dem Griff vorgesehenen haptischen Signalgeber übermittelt wird, durch den in oder an dem Griff ein haptisches Signal ausgegeben wird. Bei dem erfindungsgemäßen Verfahren wird in Folge eines durch die Steuer- und Regelvorrichtung erfassten und von dieser mit einer gespeicherten, berechneten oder festinstallierten Schwelle verglichenen Arbeitsstrom- oder Arbeitsspannungswertes bei Über- oder Unterschreitung der Schwelle wenigstens ein haptisches Signal an dem zur manuellen Führung des Schweiß- oder Lötbrenners dienenden Griff des Schweiß- oder Lötbrenners ausgegeben. Dieses wenigstens eine haptische Signal kann von einem Bediener der Schweiß- oder Lötvorrichtung sofort über seine Hand wahrgenommen werden, woraufhin zeitnah eine Gegenreaktion durch den Bediener ausgeführt werden kann, die zu einer verbesserten Schweiß- oder Lötbrennerstellung oder -bewegung führt, was wiederum das Schweiß- oder Lötergebnis nachhaltig positiv beeinflusst.

Von Vorteil ist es auch, wenn mit wenigstens einer Mess- und/oder Sensoreinrichtung eine Temperatur eines mit der Schweiß- oder Lötvorrichtung geschweißten oder gelöteten Werkstückes und/oder einer auf oder in dem Werkstück durch das Schweiß- oder Lötverfahren erzeugten Schmelze und/oder eine Schweiß- oder Lötgeschwindigkeit und/oder ein Abstand des Schweiß- oder Lötbrenners zu einer Schweiß- oder Lötstelle erfasst wird und das erfasste Mess- oder Sensorsignal an die Steuer- und Regelvorrichtung übermittelt wird. So kann bei Über- oder Unterschreitung des Schwellenwertes durch das Mess- oder Sensorsignal ein haptisches Signal an dem zur manuellen Führung des Schweiß- oder Lötbrenners dienenden Griff des Schweiß- oder Lötbrenners ausgegeben werden.

In einer vorteilhaften Ausbildung des erfindungsgemäßen Verfahrens werden über die gleichen beiden elektrischen Leitungen der Schweiß- oder Lötbrenner und der haptische Signalgeber und gegebenenfalls eine Bedien- und Anzeigeeinheit an dem Schweiß- oder Lötbrenner und gegebenenfalls Sensoren einer Mess- und/oder Sensoreinrichtung zur Erfassung einer Temperatur eines mit der Schweiß- oder Lötvorrichtung geschweißten oder gelöteten Werkstückes und/oder einer auf oder in dem Werkstück durch das Schweiß- oder Lötverfahren erzeugten Schmelze und/oder einer Schweiß- oder Lötgeschwindigkeit und/oder eines Abstand des Schweiß- oder Lötbrenners zu einer Schweiß- oder Lötstelle mit Energie versorgt und das Warnsignal von der Steuer- und Regelvorrichtung an den haptischen Signalgeber übertragen. Hierdurch wird der Aufbau der Schweiß- oder Lötvorrichtung besonders übersichtlich.

Vorzugsweise wird das haptische Signal in Abhängigkeit von einem Vorzeichen und/oder einer Höhe einer Differenz zwischen der Schwelle und dem erfassten Arbeitsstrom oder der erfassten Arbeitsspannung und/oder zwischen einem Schwellenwert und einer mit der Mess- und/oder Sensoreinrichtung erfassten Temperatur eines mit der Schweiß- oder Lötvorrichtung geschweißten oder gelöteten Werkstückes und/oder einem Abstand des Schweiß- oder Lötbrenners zu einer Schweiß- oder Lötstelle und/oder einer Schweiß- oder Lötgeschwindigkeit mit wenigstens zwei unterschiedlichen Frequenzen ausgegeben. So können, je nach Frequenz des Warnsignals, unterschiedliche Informationen an den Bediener der Schweiß- oder Lötvorrichtung übermittelt werden. Zum Beispiel kann eine erste Frequenz dem Bediener anzeigen, dass sich der Schweiß- oder Lötbrenner zu nahe an oder in einer ungünstigen Stellung relativ zu dem Werkstück befindet und/oder die Temperatur des Werkstückes zu hoch ist und/oder die Schweiß- oder Lötgeschwindigkeit zu hoch ist, während eine zweite Frequenz dem Bediener anzeigen kann, dass sich der Schweiß- oder Lötbrenner zu weit entfernt von oder in einer ungünstigen Stellung relativ zu dem Werkstück befindet und/oder die Temperatur des Werkstückes zu niedrig ist und/oder die Schweiß- oder Lötgeschwindigkeit zu niedrig ist.

Eine bevorzugte Ausführungsform der erfindungsgemäßen Schweiß- oder Lötvorrichtung, deren Aufbau, Funktion und Vorteile, wird im Folgenden anhand von Figuren näher erläutert, wobei
- Figur 1: schematisch einen Ausschnitt eines manuell zu bedienenden Schweißbrenners 9 gemäß der vorliegenden Erfindung mit abschmelzender Schweißelektrode entsprechend dem MSG-Schweißen zeigt; und
- Figur 2: schematisch einen Prinzipaufbau einer Ausführungsform der erfindungsgemäßen Schweiß- oder Lötvorrichtung zeigt.

Die folgenden Ausführungen gelten analog auch für eine erfindungsgemäße Schweißvorrichtung mit nicht abschmelzender Schweißelektrode entsprechend dem WIG- bzw. TIG-Schweißen sowie für eine erfindungsgemäße Lötvorrichtung.

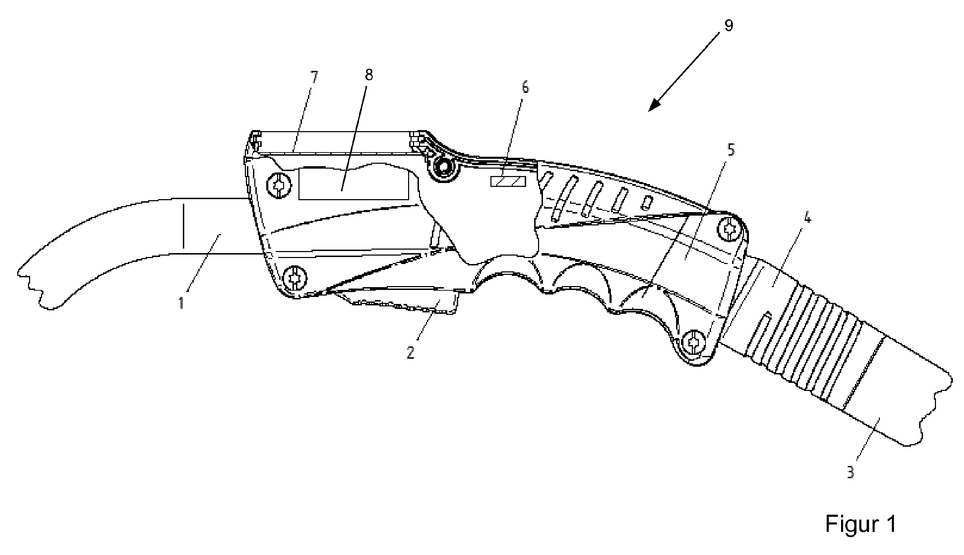

Figur 1 zeigt einen Teil eines Schweißbrenners 9 einer erfindungsgemäßen Schweißvorrichtung 14. In dem hier gezeigten Ausführungsbeispiel ist der Schweißbrenner 9 ein Schweißbrenner zum MSG-Schweißen.

Der Schweißbrenner 9 weist einen Brennerhals 1 zur Zuführung eines Arbeitsstromes und aller notwendigen Medien zum Schweißprozess auf. An dem Schweißbrenner 9 ist zudem ein Brennertaster 2 zum Ein- und Ausschalten des Arbeitsstromes vorgesehen.

Darüber hinaus ist an dem Schweißbrenner 9 ein Brennerschlauchpaket 3 zur Verbindung des Schweißbrenners 9 mit weiteren Bestandteilen der Schweißvorrichtung 14, wie einer Energieversorgungseinheit 11 und einer Steuer- und Regelvorrichtung 12, vorgesehen. Das Brennerschlauchpaket 3 umfasst alle für den Schweißprozess notwendigen Verbindungsleitungen der für den Schweißprozess notwendigen Medien, wie beispielsweise Schutzgasleitungen, elektrische Leitungen 17 für den Arbeitsstrom, Hin- und Rückleitungen einer Wasserkühlung, elektrische Leitungen 13a, 13b und eine abschmelzende Schweißelektrode 18, die von einer Drahtvorschubeinheit 10 zur Verfügung gestellt wird.

Der Schweißbrenner 9 weist ferner einen Griff 5 zur manuellen Handhabung des Schweißbrenners 9 und einen Knickschutz 4 für das Brennerschlauchpaket 3 auf. Wahlweise kann der Schweißbrenner 9 außerdem eine Elektronik mit einer Bedien- und Anzeigeeinheit 7 und ebenfalls wahlweise eine Mess- und/oder Sensoreinrichtung 8 mit Sensoren zur Messung der Temperatur des Schweißprozesses und/oder des Brennerabstandes zur Schweißstelle und/oder der Geschwindigkeit, mit der der Schweißbrenner 9 manuell bewegt wird.

An dem Griff 5 des Schweißbrenners 9 befindet sich ein Brennertaster 2, mit dem die Schweißvorrichtung 14 ein- und ausstellbar ist.

Der Griff 5 weist in dem gezeigten Ausführungsbeispiel einen haptischen Signalgeber 6 auf. In anderen, nicht gezeigten Ausführungsformen der vorliegenden Erfindung können auch mehrere haptische Signalgeber 6 in oder an dem Griff 5 vorgesehen sein.

Der haptische Signalgeber 6, die Elektronik mit der Bedien- und Anzeigeeinheit 7 und die wahlweise Mess- und/oder Sensoreinrichtung 8 mit Sensoren zur Messung der Temperatur des Schweißprozesses und/oder des Brennerabstandes zur Schweißstelle und/oder der Geschwindigkeit, mit der der Schweißbrenner 9 manuell bewegt wird, sind über die elektrischen Leitungen 13a, 13b mit der Steuer- und Regelvorrichtung 12 verbunden.

Der haptische Signalgeber 6 ist bei der in Figur 1 gezeigten Ausführungsform an einem oberen Bereich einer Außenoberfläche einer Griffschale des Griffes 5 vorgesehen, sodass er bei Bedienung der Schweißvorrichtung 14 in der Handinnenfläche des jeweiligen Bedieners liegt, wodurch von dem haptischen Signalgeber 6 abgegebene haptische Signale besonders gut von dem Bediener wahrgenommen werden.

Der haptische Signalgeber 6 ist in dem gezeigten Ausführungsbeispiel ein vibrierender Motor, kann jedoch auch eine andere, haptische Signale abgebende Baugruppe, wie beispielsweise ein Piezoelement, sein.

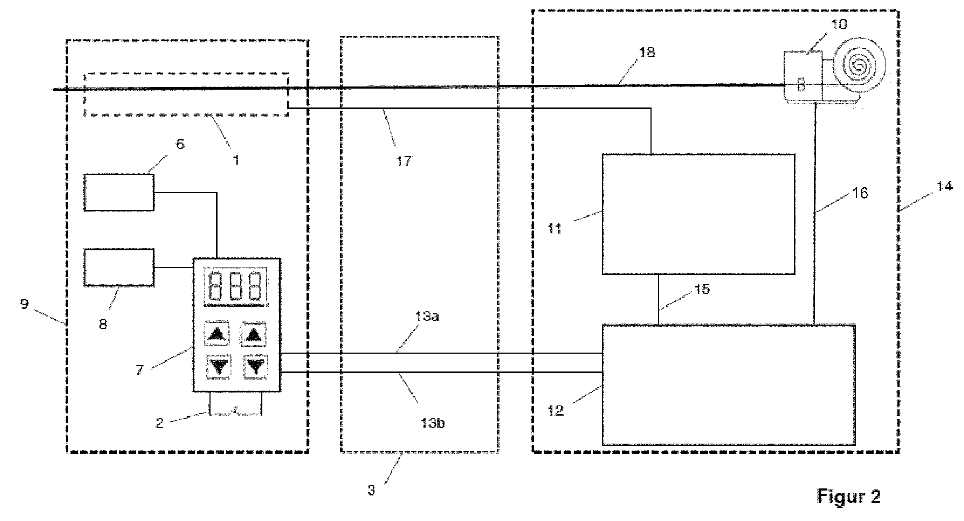

In dem in Figur 1 gezeigten Ausführungsbeispiel ist an dem Schweißbrenner 9 eine Elektronik mit einer Bedien- und Anzeigeeinheit 7 vorgesehen. In anderen, nicht gezeigten Ausführungsformen der vorliegenden Erfindung kann diese auch innerhalb des Schweißbrenners 9 integriert sein oder entfallen. Im letzteren Fall ist der haptische Signalgeber 6 direkt mit einer in Figur 2 schematisch gezeigten Steuer- und Regelvorrichtung 12 verbunden.

Der Schweißbrenner 9, der haptische Signalgeber 6, die an dem Schweißbrenner 9 vorgesehene Elektronik mit der Bedien- und Anzeigeeinheit 7 und Sensoren einer Mess- und/oder Sensoreinrichtung 8 der Schweißvorrichtung 14, die einem Erfassen einer Temperatur eines mit der Schweiß- oder Lötvorrichtung 14 geschweißten oder gelöteten Werkstückes und/oder einer auf oder in dem Werkstück durch das Schweiß- oder Lötverfahren erzeugten Schmelze und/oder einer Schweiß- oder Lötgeschwindigkeit und/oder eines Abstandes des Schweiß- oder Lötbrenners 9 zu einer Schweiß- oder Lötstelle dienen kann, sind bei dem gezeigten Ausführungsbeispiel über insgesamt nur zwei elektrische Leitungen 8, die hier in Form von Drahtleitungen ausgeführt sind, mit der Steuer- und Regelvorrichtung 12 und einer Energieversorgungseinrichtung 11 für die Schweißvorrichtung 14 verbunden.

Figur 2 zeigt schematisch ein Ausführungsbeispiel einer erfindungsgemäßen Schweiß oder Lötvorrichtung 14 mit einem Schweiß- oder Lötbrenner 9, wie beispielsweise dem Schweißbrenner 9 aus Figur 1.

Der Schweiß- oder Lötbrenner 9 ist mit einer Energieversorgungseinrichtung 11 und einer Steuer- und Regelvorrichtung 12 der Schweiß- oder Lötvorrichtung 14 über ein Brennerschlauchpaket 3 verbunden. Das Brennerschlauchpaket 3 beinhaltet in dem gezeigten Ausführungsbeispiel alle für den Schweiß- oder Lötprozess notwendigen Verbindungsleitungen der für den Schweiß- oder Lötprozess notwendigen Medien, wie zu Figur 1 oben erläutert.

Die Schweiß- oder Lötvorrichtung 14 enthält eine Steuer- und Regelvorrichtung 12, eine Energieversorgungseinrichtung 11 in Form eines Leistungsmoduls zur Bereitstellung eines Arbeitsstromes oder einer Arbeitsspannung für den Schweiß- oder Lötprozess und wahlweise eine Drahtvorschub-Einheit 10 zur Förderung einer abschmelzenden Drahtelektrode 18.

Die Steuer- und Regelvorrichtung 12 beinhaltet auch Bedien- und Anzeigeelemente zum Betrieb der Schweiß- oder Lötvorrichtung 14. Über Steuerleitungen 15 ist die Steuer- und Regelvorrichtung 12 mit dem Leistungsmodul zur Bereitstellung eines Arbeitsstromes oder einer Arbeitsspannung für den Schweiß- oder Lötprozess verbunden. Über eine Leitung 17 des Brennerschlauchpaketes 3 wird der Schweiß- oder Lötbrenner 9 mit dem Arbeitsstrom oder der Arbeitsspannung versorgt.

Die Steuer- und Regelvorrichtung 12 ist über elektrische Leitungen 13a, 13b des Brennerschlauchpaketes 3 mit dem Schweiß- oder Lötbrenner 9 verbunden. Mit Hilfe der elektrischen Leitungen 13a, 13b werden in dem gezeigten Ausführungsbeispiel der haptische Signalgeber 6, die Elektronik mit der Bedien- und Anzeigeeinheit 7 und wenigstens einen Sensor der Mess- und/oder Sensoreinrichtung 8 mit Energie versorgt und ein Warnsignal von der Steuer- und Regelvorrichtung 12 an den haptischen Signalgeber 6 übertragen.

In dem gezeigten Ausführungsbeispiel ist die Signalverbindung mit nur zwei elektrischen Leitungen 13a, 13b ausgeführt. Der Informationsaustauch zwischen der Steuer- und Regelvorrichtung 12 und dem Schweiß- oder Lötbrenner 9 erfolgt dabei vorzugsweise über ein digitales Bussystem mit serieller Datenübertragung.

Die Steuer- und Regelvorrichtung 12 ist in der gezeigten Ausführungsform zudem mit der Drahtvorschub-Einheit 10 für die abschmelzende Schweißelektrode 18 über eine Verbindung 16 verbunden. Die Verbindung 16 ist vorzugsweise als ein digitales Bussystem mit serieller Datenübertragung ausgebildet.

Die Mess- und/oder Sensoreinrichtung 8 beinhaltet in dem gezeigten Ausführungsbeispiel einen Sensor zum Erfassen eines Abstandes des Schweiß- oder Lötbrenners 9 zu einer Schweiß- oder Lötstelle sowie einen Sensor zum Erfassen einer Schweiß- oder Lötgeschwindigkeit der Schweiß- oder Lötvorrichtung 14, kann jedoch in anderen Ausführungsformen der vorliegenden Erfindung zusätzlich oder alternativ auch wenigstens einen Sensor zum Erfassen einer Temperatur eines mit der Schweiß- oder Lötvorrichtung 14 geschweißten oder gelöteten Werkstückes und/oder einer auf oder in dem Werkstück durch das Schweiß- oder Lötverfahren erzeugten Schmelze aufweisen.

Von der Steuer- und Regelvorrichtung 12 werden wenigstens ein Arbeitsstrom oder eine Arbeitsspannung an einem sich zwischen dem Schweiß- oder Lötbrenner 9 und einer Schweiß- oder Lötstelle aufspannenden Lichtbogen erfasst. Bei Über- oder Unterschreitung einer an der Steuer- und Regelvorrichtung 12 vorgegebenen Schwelle für den Arbeitsstrom oder die Arbeitsspannung wird von der Steuer- und Regelvorrichtung 12 ein Warnsignal an den wenigstens einen haptischen Signalgeber 6 ausgegeben, welcher daraufhin wenigstens ein haptisches Signal für den Bediener ausgibt und diesem damit signalisiert, den Schweiß- oder Lötbrenner 9 anders zu positionieren, um ein optimales Schweißergebnis zu erzielen.

Die Steuer- und Regelvorrichtung 12 beinhaltet auch Bedienelemente. Mit Hilfe dieser Bedienelemente kann die Funktion des haptischen Signalgebers 6 ein- und ausgeschaltet werden.

## Patentansprüche

1. Schweiß- oder Lötvorrichtung (14) mit einem Schweiß- oder Lötbrenner (9) mit einem Griff (5) zur manuellen Handhabung des Schweiß- oder Lötbrenners (9), einer Energieversorgungseinrichtung (11) zum Bereitstellen wenigstens eines Arbeitsstroms oder einer Arbeitsspannung für einen Schweiß- oder Lötprozess, einer Steuer- und Regelvorrichtung (12) zum Erfassen und Regeln des Arbeitsstroms oder der Arbeitsspannung zwischen dem Schweiß- oder Lötbrenner (9) und einer Schweiß- oder Lötstelle und zum Einstellen von Arbeitsstrom oder Arbeitsspannung an der Energieversorgungseinrichtung (11),
**dadurch gekennzeichnet,**
**dass** in oder an dem Griff (5) wenigstens ein mit der Steuer- und Regelvorrichtung (12) gekoppelter haptischer Signalgeber (6) vorgesehen ist.

2. Schweiß- oder Lötvorrichtung nach Anspruch 1, **dadurch gekennzeichnet, dass** der wenigstens eine haptische Signalgeber (6) wenigstens einen Motor mit Unwucht, wenigstens einen Magnetvibrationsmotor und/oder wenigstens ein Piezoelement aufweist.

3. Schweiß- oder Lötvorrichtung nach wenigstens einem der vorhergehenden Ansprüche, **dadurch gekennzeichnet, dass** der wenigstens eine haptische Signalgeber (6) in einer Auflage für eine Handfläche eines die Schweiß- oder Lötvorrichtung (14) bedienenden Bedieners an dem Griff (5) vorgesehen ist.

4. Schweiß- oder Lötvorrichtung nach wenigstens einem der vorhergehenden Ansprüche, **dadurch gekennzeichnet, dass** der wenigstens eine haptische Signalgeber (6) an- und ausschaltbar ist.

5. Schweiß- oder Lötvorrichtung nach wenigstens einem der vorhergehenden Ansprüche, **dadurch gekennzeichnet, dass** nur zwei elektrische Leitungen (13a, 13b) zwischen dem Schweiß- oder Lötbrenner (9) und der Steuer- und Regelvorrichtung (12) vorgesehen sind, welche sowohl Energieversorgungsleitungen für den haptischen Signalgeber (6) und/oder eine Bedien- und Anzeigeeinheit der Schweiß- oder Lötvorrichtung (14) als auch Signalleitungen für einen Informationsaustausch zwischen dem Schweiß- oder Lötbrenner (9) und der Steuer- und Regelvorrichtung (12) sind.

6. Schweiß- oder Lötvorrichtung nach wenigstens einem der vorhergehenden Ansprüche, **dadurch gekennzeichnet, dass** die Schweiß- oder Lötvorrichtung wenigstens eine mit der Steuer- und Regelvorrichtung (12) gekoppelte Mess- und/oder Sensoreinrichtung (8) zum Erfassen einer Temperatur eines mit der Schweiß- oder Lötvorrichtung (14) geschweißten oder gelöteten Werkstückes und/oder einer auf oder in dem Werkstück durch das Schweiß- oder Lötverfahren erzeugten Schmelze und/oder einer Schweiß- oder Lötgeschwindigkeit und/oder eines Abstandes des Schweiß- oder Lötbrenners (9) zu einer Schweiß- oder Lötstelle aufweist.

7. Schweiß- oder Lötverfahren mit einer Schweiß- oder Lötvorrichtung (14) mit einem Schweiß- oder Lötbrenner (9), der mittels eines Griffes (5) manuell bewegt wird, wobei der Schweiß- oder Lötbrenner mit einer Energieversorgungseinrichtung (11) mit wenigstens einem Arbeitsstrom oder einer Arbeitsspannung versorgt wird, und wobei mit einer Steuer- und Regelvorrichtung (12) der Schweiß- oder Lötvorrichtung (14) der Arbeitsstrom oder die Arbeitsspannung zwischen dem Schweiß- oder Lötbrenner (9) und einer Schweiß- oder Lötstelle erfasst und geregelt wird und wenigstens der Arbeitsstrom oder die Arbeitsspannung an der Energieversorgungseinrichtung (11) eingestellt werden,
**dadurch gekennzeichnet,**
**dass** dann, wenn durch die Steuer- und Regelvorrichtung (12) ein Über- oder Unterschreiten einer darin gespeicherten, berechneten oder fest installierten Schwelle für den Arbeitsstrom oder die Arbeitsspannung erfasst wird, von der Steuer- und Regelvorrichtung (12) ein Warnsignal an wenigstens einen in oder an dem Griff (5) vorgesehenen haptischen Signalgeber (6) übermittelt wird, durch den in oder an dem Griff (5) ein haptisches Signal ausgegeben wird.

8. Schweiß- oder Lötverfahren nach Anspruch 6 oder 7, **dadurch gekennzeichnet, dass** mit wenigstens einer Mess- und/oder Sensoreinrichtung (8) eine Temperatur eines mit der Schweiß- oder Lötvorrichtung (14) geschweißten oder gelöteten Werkstückes und/oder einer auf oder in dem Werkstück durch das Schweiß- oder Lötverfahren erzeugten Schmelze und/oder eine Schweiß- oder Lötgeschwindigkeit und/oder ein Abstand des Schweiß- oder Lötbrenners (9) zu einer Schweiß- oder Lötstelle erfasst wird und das erfasste Mess- oder Sensorsignal an die Steuer- und Regelvorrichtung (12) übermittelt wird.

9. Schweiß- oder Lötverfahren nach wenigstens einem der Ansprüche 6 bis 8, **dadurch gekennzeichnet, dass** über die gleichen beiden elektrischen Leitungen (13a, 13b) der haptische Signalgeber (6) und/oder eine Bedien- und Anzeigeeinheit (7) der Schweiß- oder Lötvorrichtung (14) und/oder eine Mess- und/oder Sensoreinrichtung (8) zur Erfassung einer Temperatur eines mit der Schweiß- oder Lötvorrichtung (14) geschweißten oder gelöteten Werkstückes und/oder einer auf oder in dem Werkstück durch das Schweiß- oder Lötverfahren erzeugten Schmelze und/oder einer Schweiß- oder Lötgeschwindigkeit und/oder eines Abstandes des Schweiß- oder Lötbrenners (9) zu einer Schweiß- oder Lötstelle mit Energie versorgt wird/werden und das Warnsignal von der Steuer- und Regelvorrichtung (12) an den haptischen Signalgeber (6) übertragen wird.

10. Schweiß- oder Lötverfahren nach wenigstens einem der Ansprüche 6 bis 9, **dadurch gekennzeichnet, dass** das haptische Signal in Abhängigkeit von einem Vorzeichen und/oder einer Höhe einer Differenz zwischen der Schwelle und dem erfassten Arbeitsstrom oder der erfassten Arbeitsspannung und/oder zwischen einem Schwellenwert und einer mit der Mess- und/oder Sensoreinrichtung (8) erfassten Temperatur eines mit der Schweiß- oder Lötvorrichtung geschweißten oder gelöteten Werkstückes und/oder einem Abstand des Schweiß- oder Lötbrenners (9) zu einer Schweiß- oder Lötstelle und/oder einer Schweiß- oder Lötgeschwindigkeit mit wenigstens zwei unterschiedlichen Frequenzen ausgegeben wird.
